# NEUE EUROPÄISCHE PATENTSCHRIFT

(11) **EP 1 550 845 B2**
(45) Veröffentlichungstag und Bekanntmachung des Hinweises auf die Entscheidung über den Einspruch: **04.05.2022**
(45) Hinweis auf die Patenterteilung: 31.08.2011
(21) Anmeldenummer: 04030527.8
(22) Anmeldetag: 22.12.2004
(51) Int. Cl.: G01D 5/20, G01D 3/08, G01P 3/487

(54) **Positionsdetektor**
positionsdetector
détecteur de position

(30) Priorität: 24.12.2003 DE 20320021 U; 13.01.2004 DE 202004000413 U; 13.02.2004 DE 202004002273 U
(43) Veröffentlichungstag der Anmeldung: 06.07.2005
(73) Patentinhaber: Avago Technologies International Sales Pte. Limited, Singapore 768923 (SG)
(72) Erfinder: Mehnert, Walter, 85521 Ottobrunn (DE); Theil, Thomas, 85258 Aufhausen (DE)
(74) Vertreter: Kilian Kilian & Partner

(56) Entgegenhaltungen:
- EP-A- 0 679 868
- WO-A1-95/24613
- WO-A1-2004/032325
- DE-A1- 2 907 776
- JP-A- H06 314 968
- US-A- 6 084 400
- US-A1- 2003 094 945
- US-B1- 6 191 687

## Beschreibung

Die Erfindung betrifft einen Positionsdetektor zur zählenden Erfassung von Translationsoder Rotationsbewegungen vorzugsweise in einer vorgegebenen Richtung, wobei dieser Positionsdetektor insoweit autark ist, als er zumindest die erforderlichen Zähl- und Speichervorgänge unabhängig von einer externen Stromquelle durchführen kann.

Zu diesem Zweck umfaßt der Sensorteil des Positionsdetektors wenigstens einen Permanentmagneten, der als Erregermagnet dient und sich mit dem Körper, dessen Bewegungen gezählt werden sollen, also beispielsweise mit einer sich drehenden Welle oder einem sich hin und her bewegenden Maschinenschlitten mit bewegt, wobei er im allgemeinen direkt an diesem Körper befestigt oder mit diesem so gekoppelt ist, dass er dessen Bewegung abbildet.

Weiterhin weist der Sensorteil des Positionsdetektors ein hier so bezeichnetes "ferromagnetisches Element" auf, das aus einer Kombination von hart- und/oder weichmagnetischen Komponenten besteht, die bei Anlegen eines äußeren Magnetfelds bestimmter Größe durch schlagartiges Verändern ihrer Konsistenz (z.B. Umklappen und/oder Ausrichten einer großen Zahl der in ihnen vorhandenen Weiß'schen Bezirke) und/oder Geometrie (Lageänderung ferromagnetischer Bauteile im Raum) zu einer schlagartigen Änderung des Magnetflusses und damit zu einem entsprechenden Spannungsimpuls bestimmter Leistung in einer sie umgebenden Spule führen. Die schlagartige Änderung des ferromagnetischen Elementes wird also durch ein schlagartiges Umklappen der Weiß'schen Bezirke bzw. durch eine schlagartige Veränderung des magnetischen Widerstandes beschrieben.

Eine besondere Ausführungsform der erstgenannten Gruppe sind Impuls- und Wiegand-Drähte, die sich keines makroskopischen mechanischen Effektes bei der Erzeugung des vorgenannten Spannungsimpulses bedienen.

Ein Vertreter der zweiten Gruppe, bei der mechanische makroskopische Effekte - hier Speicherung der später erzeugten elektrischen Energie in einer Feder ― benutzt werden, sind magnetische Reed-Kontakte, wie sie in der US-Patentschrift 6,628,741 angegeben sind. Als gravierender Nachteil gerade dieser speziellen Lösung sind die mechanische Ermüdung und die unkontrollierten Prellungen der Kontakte sowie der geringe Meßeffekt anzuführen. Eine kostenoptimale Minimallösung ist damit kaum zu erzielen.

Aus EP 0 658 745 A2 und der EP-A-0 679 868 ist jeweils_ein Positionsdetektor bekannt, bei dem das ferromagnetische Element aus einem drehbar gelagerten Permanentmagneten

und einem Eisenkern besteht, an dem sich der drehbar gelagerte Permanentmagnet so lange "festhält", bis die magnetische Abstoßungskraft, die der sich nähernde Erregermagnet auf ihn ausübt, so stark wird, dass sie die Haltekraft zwischen dem Eisenkern und dem drehbar gelagerten Permanentmagneten überwindet und sich letzterer schlagartig um seine Achse dreht. Hierdurch ändert sich die Lage der Weiss' schen Bezirke und damit der Magnetfluß schlagartig, der eine auf den Eisenkern gewickelte Induktionsspule durchsetzt (großes dΦ /dt), und es wird in dieser Spule ein nutzbarer Spannungsimpuls induziert.

Gemeinsam ist allen diesen Lösungen, dass der jeweils induzierte Spannungsimpuls nicht nur als zu zählender Signalimpuls dient, sondern auch zur Stromversorgung zumindest eines Teils der dem Sensorteil nachgeordneten Elektronik eingesetzt werden kann, so dass diese in der Lage ist, ohne externe Versorgung mit elektrischer Energie die für die Erfassung der zu überwachenden Bewegung erforderlichen Zähl- und Speichervorgänge auszuführen, d.h. z.B. die Umdrehungen einer Welle oder die Hin- und Herbewegungen eines Schlittens zu zählen und den dabei erhaltenen Zählwert zu speichern, damit dieser für einen externen Verwender verfügbar ist.

In der EP-A-O 679 868 wird darüber hinaus eine Schnittstelle erwähnt, die in Reaktion auf ein von einem Verwender kommendes Anforderungssignal das Lesen bzw. Weitergabe des Zählwertes an diesen Verwender steuern kann. Auf das Problem, wie verhindert werden kann, dass sich Schreib- und Lesevorgänge gegenseitig stören, wird dabei jedoch im Einzelnen nicht eingegangen.

US-B1-6 191 687 beschreibt einen magnetischen Umdrehungszähler, bei dem ein Wiegandgenerator sowohl die zu zählenden Impulse als auch die zu ihrer per Funk erfolgenden, jeweils sofortigen Übertragung an einen entfernt liegenden Verwender erforderliche Energie liefert. Eine Zählung der Impulse oder eine Zwischenspeicherung der Zählwerte am Ort des Sensors erfolgt nicht. Das Problem eine Schreib- Lesekollision wird nicht erwähnt.

US-A-6 084 400 beschreibt einen magnetischen Umdrehungszähler mit mehreren Wiegandsensoren, der sowohl eine Feinwinkelmessung innerhalb von 360° als auch eine Umdrehungszählung durchführen kann, wobei die Umdrehungszählwerte in einem nicht flüchtigen Lese- Schreibspeicher zwischengespeichert werden und von diesem an eine Überwachungseinheit weitergegeben werden können. Auch hier wird die Möglichkeit einer Schreib- Lesekollision nicht erwähnt und keine Maßnahmen zu ihrer Vermeidung beschrieben.

Der US 2003//00 949 45 A1 ist ein magnetischer Wellenumdrehungszähler entnehmbar, bei dem drei Reed-Relais-Einheiten zur Richtungserkennung der Drehung einer Welle und zur Zählung ihrer vollständigen Umdrehungen verwendet werden. Die Ausgangssignale der Reed-Relais-Einheiten werden einer "state machine" zugeführt, welche den erhaltenen Zählwert an einem Ausgang zur Verfügung stellt, dessen Lesesteuerung nicht weiter erläutert wird

Der Erfindung liegt die Aufgabe zugrunde, einen Positionsdetektor der eingangs genannten Art so auszubilden, dass eine Kollision von Lese- und Schreibvorgängen an einer den Umdrehungs-Zählwert enthaltenden nicht flüchtigren Zähl- und Speicherschaltung mit Sicherheit ausgeschlossen ist und_dass er mit einem möglichst geringen technischen und kostenmäßigen Aufwand realisiert werden kann. Insbesondere soll er einen möglichst geringen Energieverbrauch und eine minimale Baugröße aufweisen.

Zur Lösung dieser Aufgabe sieht die Erfindung die im Anspruch 1 zusammengefaßten Merkmale vor.

Die dort definierte Elektronik umfasst die minimale schaltungstechnische Ausstattung, die erforderlich ist, um Bewegungsabläufe, wie z.B. Umdrehungen einer Welle oder Hin- und Herbewegungen eines Schlittens oder dergleichen zu zählen und den jeweils ermittelten Zählwert zu speichern, ohne dabei auf eine externe Stromversorgung angewiesen zu sein. Für diese Funktionen sind insbesondere die wenigstens eine Gleichrichterschaltung, der wenigstens eine Kondensator, die wenigstens eine Komparatorschaltung und die nicht flüchtige Zähl- und Speicherschaltung vorgesehen. Da die ermittelten Zählwerte für einen Verwender verfügbar gemacht werden müssen, sind weiterhin eine Daten-Leseschaltung und eine Steuerschaltung vorgesehen, wobei letztere für einen störungsfreien Ablauf der Zähl- und Speichervorgänge einerseits und der Lesevorgänge andererseits sorgt, bei denen die Daten-Leseschaltung den jeweils vorhandenen Zählwert übernimmt, um ihn (eventuell in verarbeiteter Form) einem Verwender zur Verfügung zu stellen.
a) Die Lesevorgänge (jeweils: Übernahme des in der nicht flüchtigen Zähl- und Speicherschaltung enthaltenen Zählerstandes durch die Daten-Leseschaltung und nachfolgende Datenübertragung) werden durch vom Verwender ausgesandte Abfragesignale initiiert, die zu jedem beliebigen Zeitpunkt auftreten können (asynchroner Betrieb).
b) Die Lesevorgänge werden durch die Elektronik des Positionsdetektors selbst so gesteuert, dass es zu keiner Kollision mit den zu beliebigen Zeitpunkten (aber mit Zeitabständen, die aufgrund der zu überwachenden Bewegung einen Minimalwert nicht unterschreiten,) auftretenden Zähl- und Speichervorgängen kommen kann (synchronisierter Betrieb).

Im Fall a) sorgt die Steuerschaltung u.a. dafür, dass dann, wenn ein Lesevorgang eingeleitet ist und abläuft, das Auftreten eines zu zählenden Spannungsimpulses zunächst keinen Zähl- und Speichervorgang auslöst, aber so lange zwischengespeichert wird, bis der Lesevorgang beendet ist, um dann für die Zählung des zwischengespeicherten Ereignisses und die Speicherung des neuen Zählwertes zu sorgen, so dass keine Zählfehler auftreten.

Da der Verwender durch sein Abfragesignal auch dann einen Lesevorgang initiieren können muß, wenn längere Zeit kein zu zählender Spannungsimpuls aufgetreten ist, so dass der Kondensator keine elektrische Energie zur Verfügung stellen kann, müssen Schaltungsteile, die für den Lesevorgang benötigt werden, zumindest für den hierfür benötigten Zeitraum mit externer elektrischer Energie versorgt werden.

Wesentlich ist bei dieser Variante a), dass folgende Bedingungen erfüllt sind:
- Die Daten-Leseschaltung muß nach Auftreten eines Abfragesignals mit einer gewissen Tot- oder Verzögerungszeit auf die Zähl- und Speicherschaltung zugreifen, die länger ist als die für einen Zähl- und Speichervorgang benötigte Zeit.
- Die in dem wenigstens einen Kondensator gespeicherte Energie muß von ihm trotz unvermeidlicher Leckströme mindestens für die Dauer der für einen Lesevorgang benötigten Zeitspanne auf einem so hohem Niveau gehalten werden, dass ein zwischengespeichertes Zählereignis noch sicher verarbeitet werden kann, obwohl die von außen kommende Energieversorgung am Ende des Lesevorgangs wieder abgeschaltet wird.
- Die Zeit zwischen zwei Zähl- und Speichervorgängen muß größer sein als die Summe der Zeiten, die für einen Zähl- und Speichervorgang und eine Datenübertragung benötigt werden.
   Im Fall b) müssen diese Bedingungen nicht erfüllt sein, da die Elektronik des Positionsdetektors immer feststellen kann, ob gerade kein Zähl- und Speichervorgang läuft und ob genügend aus der zu überwachenden Bewegung entnommene und in elektrischer Form gespeicherte Energie vorhanden ist, um einen Lesevorgang durchführen zu können. Es kann hier also ein völlig autark arbeitender, d.h. von einer externen Quelle für elektrische Energie vollkommen unabhängiger Positionsdetektor aufgebaut werden.

Ist die für den Lesevorgang benötigte Energie groß, weil z.B. die Datenübertragung an den Verwender mit Hilfe eines Senders per Funk erfolgen soll, kann ein weiterer Kondensator vorgesehen werden, der beispielsweise mit mehreren von der Induktionsspule kommenden Spannungsimpulsen, deren Polarität zu der Polarität der zu zählenden Impulse entgegengesetzt ist, so lange geladen wird, bis ausreichend elektrische Energie zur Verfügung steht.

Eine besonders bevorzugte Lösung gemäß der Erfindung zeichnet sich dadurch aus, dass alle zur Elektronik gehörenden Schaltungseinheiten und Bauelemente in einem IC-Baustein zu einer integrierten Schaltung zusammengefasst sind, so dass der gesamte Positionsdetektor aus nur drei Baueinheiten, nämlich dem Erregermagneten, dem ferromagnetischen Element mit aufgewickelter Induktionsspule und dem IC-Baustein besteht.

Diese und weitere vorteilhafte Merkmale eines erfindungsgemäßen Positionsdetektors sind in den Unteransprüchen niedergelegt.

Die Erfindung wird im folgenden anhand von Ausführungsbeispielen unter Bezugnahme auf die Zeichnung beschrieben; in dieser zeigen:
- Figur 1: in schematischer Weise die Sensoranordnung eines eine Rotationsbewegung erfassenden, erfindungsgemäßen Positionsdetektors gemäß einer ersten Aus- führungsform,
- Figur 2: in schematischer Weise die Sensoranordnung eines eine Rotationsbewegung erfassenden, erfindungsgemäßen Positionsdetektors gemäß einer zweiten Ausführungsform,
- Figur 3: in schematischer Weise die Sensoranordnung eines eine Rotationsbewegung erfassenden, erfindungsgemäßen Positionsdetektors gemäß einer dritten Aus- führungsform,
- Figur 4: in schematischer Weise die Sensoranordnung eines eine Translationsbewegung erfassenden, erfindungsgemäßen Positionsdetektors gemäß einer vierten Aus- führungsform,
- Figur 5: in schematischer Weise die Sensoranordnung eines eine Translationsbewegung erfassenden, erfindungsgemäßen Positionsdetektors gemäß einer fünften Aus- führungsform,
- Figur 6: in schematischer Weise die Sensoranordnung eines eine Translationsbewegung erfassenden, erfindungsgemäßen Positionsdetektors gemäß einer sechsten Ausführungsform,
- Figur 7: das Prinzipschaltbild einer Verarbeitungselektronik für einen erfindungsgemäßen Positionsdetektor, deren Daten-Leseschaltung von einem Verwender zu be- liebigen Zeitpunkten für einen Lesevorgang ansteuerbar ist,
- Figur 8: ein Detail aus Fig. 7 und
- Figur 9: das Prinzipschaltbild einer Verarbeitungselektronik für einen erfindungsgemäßen Positionsdetektor, deren Daten-Leseschaltung von der Elektronik des Positionsdetektors zu Zeitpunkten für einen Lesevorgang ansteuerbar ist, in denen keine Kollisionsgefahr mit der Verarbeitung eines zu zählenden Spannungsimpulses besteht.

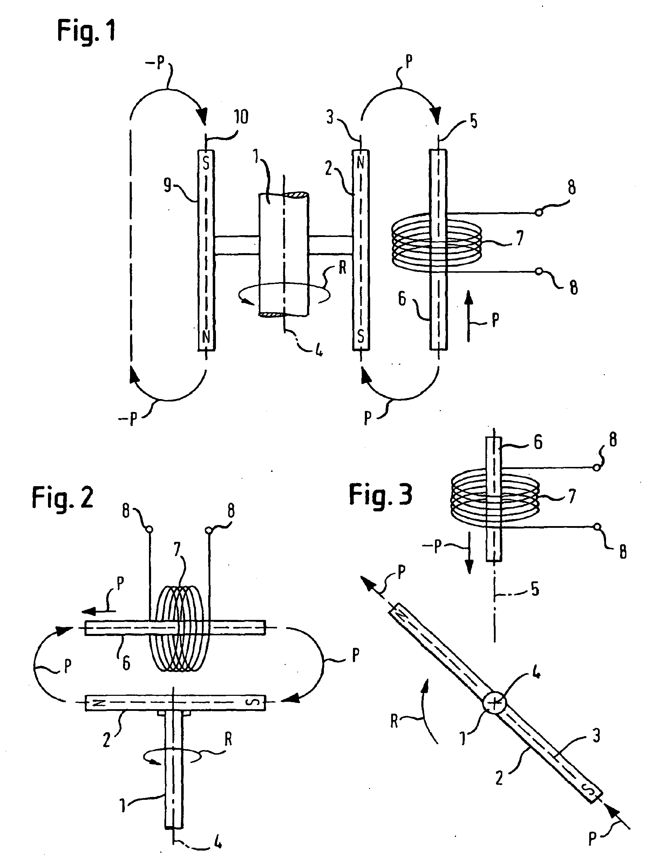

In den Figuren 1 bis 6 bzw. 7 bis 9 sind jeweils gleiche Teile mit gleichen Bezugszeichen versehen.

Alle gezeigten Ausführungsformen umfassen zumindest einen Erregermagneten 2, der mit dem Körper, dessen Bewegung überwacht werden soll, so verbunden ist, dass er diese zu überwachende Bewegung mit ausführt bzw. darstellt. Dabei nähert sich der Erregermagnet 2 periodisch an ein ferromagnetisches Element an, das in den Figuren 1 bis 6 als drahtförmiges Element wiedergegeben ist, beispielsweise von einem Impulsdraht oder einem Wiegand-Draht gebildet werden kann und im folgenden kurz als "Sensordraht 6" bezeichnet wird. Wesentlich ist, dass ein solcher Sensordraht 6 ebenso wie jedes andere für diesen Zweck geeignete ferromagnetische Element, z.B. auch eine Reed-Kontaktanordnung, in der Lage ist, bei der Annäherung des Erregermagneten 2 die zunehmende Ansammlung bzw. Speicherung von Energie in dem zwischen ihm und dem Erregermagneten existierenden Magnetfeld zu unterstützen, wobei diese Energie aus der Bewegungsenergie des zu überwachenden Körpers abgezweigt wird. Erreicht der Erregermagnet 2 bezüglich des ferromagnetischen Elementes eine bestimmte Position und damit die in dem ferromagnetischen Element herrschende magnetische Feldstärke eine bestimmte Größe, so wird die angesammelte Energie auch dann, wenn die Annäherung extrem langsam erfolgt, schlagartig freigesetzt. Bei den erwähnten Impuls- oder Wiegand-Drähten erfolgt dies in der Weise, dass die eine einheitliche magnetische Domäne bildenden Weiss' schen Bezirke des betreffenden Drahtes innerhalb eines sehr kurzen Zeitraumes in Form einer laufenden Welle umklappen, so dass in einer auf den Sensordraht 6 aufgewickelten Induktionsspule 7 ein großes dΦ/dt induziert wird und an ihren Anschlüssen 8 ein entsprechend großer Spannungsimpuls abgegriffen werden kann. In diesem Impuls ist genügend elektrische Energie enthalten, um ihn nicht nur als Signal-, d.h. Zählimpuls zu verwenden sondern auch die zu seiner Zählung und zur Speicherung des erzielten Zählwertes vorgesehene Elektronik mit der für die Durchführung dieser Vorgänge benötigten Energie zu versorgen, so dass ein insoweit autarker, d. h. von einer externen Spannungsversorgung unabhängiger Positionsdetektor gebildet wird.

Bei der in Figur 1 gezeigten Ausführungsform ist ein erster Erregermagnet 2 so an einer sich drehenden Welle 1 befestigt, dass die seine beiden Magnetpole verbindende Gerade 3 sich permanent parallel zur Drehachse 4 erstreckt. Parallel zu dieser Richtung verläuft auch die Längsachse 5 des Sensordrahtes 6, auf den die Induktionsspule 7 aufgewickelt ist, an deren Anschlüssen 8 aufgrund der beschriebenen Vorgänge immer dann ein Spannungsimpuls abgreifbar ist, wenn der erste Erregermagnet 2 bei der in Richtung des Pfeiles R erfolgenden Drehung der Welle 1 in etwa die in Figur 1 gezeigte Position erreicht hat und die Richtung der Vorspannung bzw. Polarisierung des Sensordrahtes 6 (Pfeil p in Fig. 1) der Richtung des ihn durchsetzenden Magnetfeld (Pfeil P in Fig.1) entgegengesetzt ist

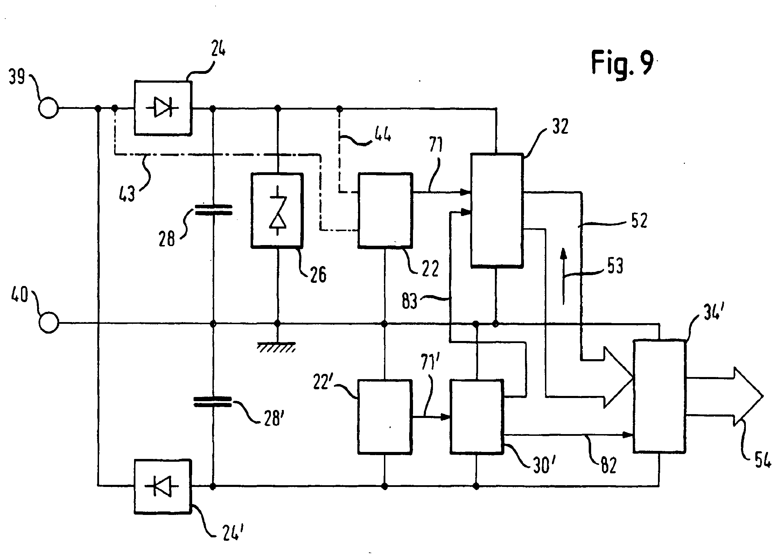

Nach der Erzeugung eines solchen Spannungsimpulses sind der Sensordraht und das ihn durchsetzende Magnetfeld dann gleich polarisiert, d.h. der Sensordraht ist in einer zu seiner vorherigen Polarisierung p entgegengesetzten Richtung vorgespannt, so dass ohne weitere Maßnahmen beim nächsten Vorbeilaufen des ersten Erregermagneten 2 am Sensordraht 6 allenfalls eine nur mit der Induktion eines schwachen Spannungsimpulses (Kümmerling) verbundene Verbesserung der Vorspannung erreicht würde. Daher ist bei dem in Fig. 1 gezeigten Ausführungsbeispiel ein zweiter Erregermagnet 9 vorgesehen, der auf der dem ersten Erregermagneten 2 diametral gegenüberliegenden Seite der Welle 1 an dieser so befestigt ist, dass sich die Gerade 10, die seine Magnetpole verbindet, ebenfalls parallel zur Drehachse 4 erstreckt, seine Polarisierung -P der des ersten Erregermagneten 2 aber gerade entgegengerichtet ist. Es ist klar, dass dann, wenn der zweite Erregermagnet 9 am Sensordraht 6 vorbeiläuft, nachdem zuvor der erste Erregermagnet 2 vorbeigelaufen ist, der Sensordraht 6 erneut ausgelöst und entgegengesetzt vorgespannt wird und in der auf ihn aufgewickelten Induktionsspule 7 ebenfalls ein Spannungsimpuls erzeugt wird, dessen Amplitude in etwa den gleichen Absolutwert wie die des vom ersten Erregermagneten 2 ausgelösten Spannungsimpulses besitzt, dessen Polarität jedoch der des vom ersten Erregermagneten 2 ausgelösten Spannungsimpulses gerade entgegengesetzt ist, so dass er von diesem ohne weiteres unterschieden werden kann. Wenn nur ganze Umdrehungen der Welle 1 gezählt werden sollen, werden die vom zweiten Erregermagneten 9 verursachten Spannungsimpulse für die Zählung unterdrückt, was aufgrund ihrer entgegengesetzten Polarität ohne weiteres möglich ist. Die in ihnen enthaltene Energie kann jedoch ebenfalls für Energieversorgungszwecke verwendet werden, wie dies im Zusammenhang mit Figur 9 noch genauer erläutert wird. Auch kann der zweite Erregermagnet 9 in Drehrichtung einen anderen Winkelabstand als 180° vom ersten Erregermagneten 2 besitzen.

Wesentlich an der in Figur 1 gezeigten Ausführungsform ist, dass die Geraden 3 und 10, welche die Pole des ersten bzw. zweiten Erregermagneten 2 bzw. 10 jeweils verbinden, bei der Drehung der Welle 1 um die Drehachse 4 umlaufen und sich dabei ständig zu sich selbst parallel so bewegen, dass sie sich alternierend bis auf einen Minimalabstand an den Sensordraht 6 annähern (in Figur 1 für den ersten Erregermagneten gezeigt) und dabei Spannungsimpulse mit alternierenden Vorzeichen erzeugen, um sich dann vom Sensordraht 6 wieder bis auf einen Maximalabstand zu entfernen (in Figur 1 für den zweiten Erregermagneten gezeigt)

Demgegenüber ist bei dem in Figur 2 dargestellten Ausführungsbeispiel der Erregermagnet 2 so an der sich drehenden Welle 1 montiert, dass sich die Gerade 3, die seine Magnetpole miteinander verbindet, senkrecht zur Drehachse 4 erstreckt, und der Sensordraht 6 von der durch die Gerade 3 bei der Drehung der Welle 1 aufgespannten Ebene ständig den gleichen Abstand besitzt. Das Umklappen der Weiss' schen Bezirke des Sensordrahtes 6 und damit die Erzeugung eines Spannungsimpulses in der Induktionsspule 7 erfolgt hier dann, wenn die Gerade 3 und die Längsachse 5 des Sensordrahtes 6 zu einander unter einem Winkel von in etwa 120° bis 150° verlaufen und die Polarisierungen quasi entgegengesetzt sind. Dies ist bei jeder vollen Umdrehung der Welle 1 zweimal der Fall, wobei in der einen dieser beiden Stellungen (von denen in Figur 2 eine dargestellt ist) die Magnetpole des Erregermagneten 2 entgegengesetzt zur anderen Stellung orientiert sind, so dass in der einen das "Rücksetzen" des Sensordrahtes 6 und in der anderen das Erzeugen des "eigentlichen" Zählimpulses erfolgt. Die Auswahl, welcher der beiden bei jeder vollen Umdrehung auftretenden, in etwa die gleiche Amplitude aber das entgegengesetzte Vorzeichen besitzenden Spannungsimpulse als Rücksetzimpuls und welcher als Zählimpuls dienen soll, ist mehr oder weniger willkürlich und kann durch die Durchlaßrichtung eines zur Verarbeitungselektronik gehörenden Einweggleichrichters festgelegt werden.

Bei dem in Figur 3 dargestellten Ausführungsbeispiel liegt die Längsachse 5 des Sensordrahtes 6 in der Ebene, die bei der Drehung der Welle 1 durch die Gerade 3 aufgespannt wird, welche die Magnetpole des Erregermagneten 2 miteinander verbindet. Ein Spannungsimpuls wird hier jeweils dann in der auf den Sensordraht 6 aufgewickelten Induktionsspule 7 ausgelöst, bevor die Gerade 3 mit der Längsachse 5 des Sensordrahtes 6 fluchtet. Ein Spannungsimpuls wird damit bei jeder vollen Umdrehung der Welle 1 zweimal erzeugt, wie dies oben unter Bezugnahme auf Figur 2 erläutert wurde. Das dort über die Vorzeichen dieser Impulse Gesagte gilt hier in gleicher Weise.

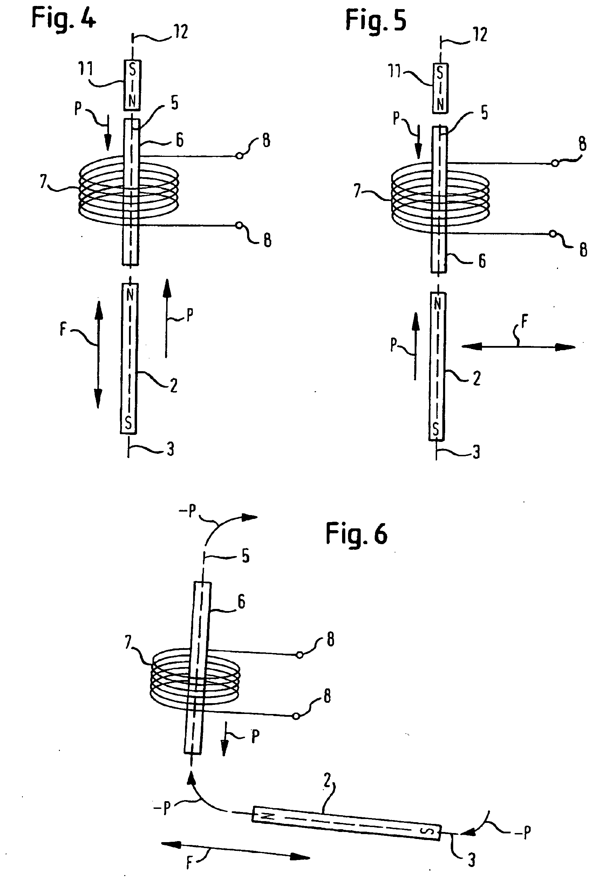

In den Figuren 4 bis 6 sind schematisch drei Ausführungsbeispiele für die relative Anordnung des Erregermagneten 2 und des Sensordrahtes 6 bei Positionsdetektoren zur Erfassung einer Translationsbewegung wiedergegeben. In allen Fällen liegt die Längsachse 5 des Sensordrahtes 6 in der Ebene, die von der Geraden 3, die die Magnetpole des Erregermagneten 2 miteinander verbindet, bei ihrer durch den jeweiligen Doppelpfeil F angedeuteten Hin- und Herbewegung aufgespannt wird.

In Figur 4 fluchten die Gerade 3, die die Magnetpole des Erregermagneten 2 miteinander verbindet, und die Längsachse 5 des Sensordrahtes 6 ständig miteinander, und der zum Zählen verwendete Spannungsimpuls wird in der Induktionsspule 7 dann erzeugt, wenn bei einer Hinbewegung des Erregermagneten 2 zum Sensordraht 6 der Nordpol des Erregermagneten 2 einen ausreichend kleinen Abstand von dem in Figur 4 unten liegenden Ende des Sensordrahtes 6 erreicht hat. Weil der Erregermagnet mit nur einer Polarisierung auf das ferromagnetische Element einwirkt, erfolgt das Rücksetzen des Sensordrahtes 6 mit Hilfe eines feststehenden Permanentmagneten 11, der auf der dem Erregermagneten 2 gegenüberliegenden Seite des Sensordrahtes 6 in geringen Abstand so angeordnet ist, dass die seine Magnetpole miteinander verbindende Gerade 12 ebenfalls mit der Längsachse 5 des Sensordrahtes 6 fluchtet, wobei seine Polung der des Erregermagneten 2 gerade entgegengerichtet ist. Die Feldstärke des Permanentmagneten 11 ist kleiner als die des Erregermagneten 2, so dass er nicht verhindern kann, dass dieser bei ausreichender Annäherung die Weiss' schen Bezirke des Sensordrahtes 6 umklappt. Kehrt der Erregermagnet 2 dann seine Bewegungsrichtung um, klappt der Permanentmagnet 11 die Weiss' schen Bezirke des Sensordrahtes 6 zurück, wenn der Erregermagnet 2 einen ausreichend großen Abstand erreicht hat.

Bei dem in Figur 5 gezeigten Ausführungsbeispiel erfolgt die Hin- und Herbewegung des Erregermagneten 2 senkrecht zu der Geraden 3, die seine Magnetpole miteinander verbindet, und der hierzu parallelen Längsrichtung 5 des Sensordrahtes 6. Der zu zählende Spannungsimpuls wird in der Induktionsspule 7 dann erzeugt, wenn sich der Erregermagnet 2 genügend weit der in Figur 5 gezeigten Stellung genähert hat, in der die Gerade 3 und die Längsachse 5 in etwa miteinander fluchten. Der hier ebenfalls vorgesehene Permanentmagnet 11 hat eine entsprechende Funktion, wie dies unter Bezugnahme auf Fig. 4 erläutert wurde.

Bei dem in Figur 6 gezeigten Ausführungsbeispiel erfolgt die Hin- und Herbewegung des Erregermagneten 2 in Richtung der Geraden 3, die seine Magnetpole miteinander verbindet, und senkrecht zur Längsrichtung 5 des ferromagnetischen Elementes 6 mit einer Hubweite, die zumindest so groß ist, dass bei einer vollständigen Hin- und Herbewegung abwechselnd einmal der Südpol und einmal der Nordpol des Erregermagneten 2 an dem zugewandten ferromagnetischen Element 6 vorbeiläuft, wobei dieses jedesmal ummagnetisiert und ein Spannungsimpuls in der Induktionsspule 7 erzeugt wird, von denen der eine als zu zählender Impuls und der andere, der ein entgegengesetztes Spannungsvorzeichen besitzt, als nicht zu zählender weiterer Spannungsimpuls gewählt werden kann. Ein gesonderter Permanentmagnet wird hier nicht benötigt

Bei allen diesen Ausführungsformen kann der Erregermagnet 2 sowohl einen kreisförmigen als auch einen quadratischen, oder einen anderen rechteckigen Querschnitt aufweisen, um die aus ihm austretenden Magnetflusslinien so zu bündeln, daß sie in optimaler Weise das ferromagnetische Element durchsetzen bzw. auf dieses einwirken.

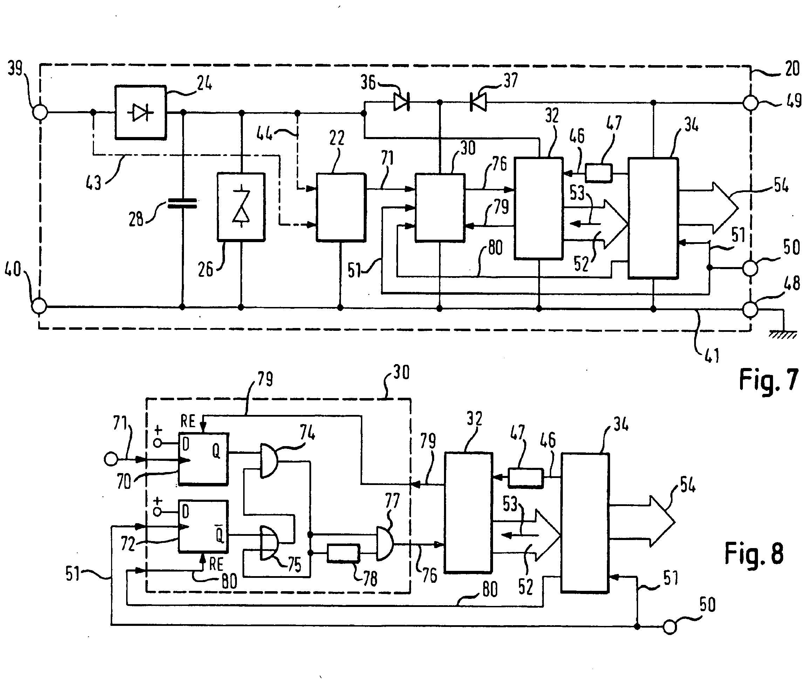

Figur 7 zeigt zwei Varianten der Verarbeitungselektronik eines erfindungsgemäßen Positionsdetektors, die sich hinsichtlich des abgefragten Spannungspegels voneinander unterscheiden, bei dessen Erreichen ein Zähl- und Speichervorgang ausgelöst wird.

Sämtliche Schaltungseinheiten sind in einem durch eine gestrichelte Linie angedeuteten IC-Baustein 20 untergebracht.

Im einzelnen umfaßt der IC-Baustein 20 eine Komparatorschaltung 22, eine Gleichrichterschaltung 24, eine Spannungsbegrenzungsschaltung 26, einen Kondensator 28, eine Steuerschaltung 30, eine nicht flüchtige Speicher- und Zählschaltung 32, eine Daten-Leseschaltung 34 und zwei Dioden 36 und 37.

Die von den Anschlüssen 8 der Induktionsspule 7 kommenden Spannungsimpulse werden dem IC-Baustein 20 über seine Eingangsanschlüsse 39, 40 zugeführt, von denen der erstere mit der durchgehenden Masseleitung 41 und der andere mit der Gleichrichterschaltung 24 verbunden ist.

Die Gleichrichterschaltung 24 ist durch ein Diodensymbol gekennzeichnet und kann im einfachsten Fall aus einer einzigen Diode bestehen, die so gepolt ist, dass sie entweder nur Spannungsimpulse mit negativer Amplitude oder, wie in Figur 7 dargestellt, nur Spannungsimpulse mit positiver Amplitude durchläßt.

Da an einer Diode in Durchlaßrichtung eine vergleichsweise hohe Spannung abfällt, wird als Gleichrichterschaltung 24 vorzugsweise ein Schalttransistor mit wesentlich kleinerer Durchlaßspannung verwendet, der so gesteuert wird, dass er von der Induktionsspule 7 kommende Spannungsimpulse mit vorgegebener Polarität durchläßt, Spannungsimpulse entgegengesetzter Polarität sperrt und überdies ein Entladen des nachfolgenden Kondensators 28 über die Induktionsspule 7 verhindert.

Alternativ kann die Gleichrichterschaltung 24 auch von einer Grätz-Brücke gebildet werden, was den Vorteil aufweist, dass der Kondensator 28 durch alle von der Induktionsspule 7 abgegebenen Spannungsimpulse geladen und jede halbe Umdrehung gezählt und gespeichert werden kann.

Um einen Zähl- und Speichervorgang erst dann auszulösen, wenn der Kondensator in dem erforderlichen Maße aufgeladen ist, wird das Erreichen eines entsprechenden Spannungspegels mit Hilfe der Komparatorschaltung 22 abgefragt.

Bei einer ersten Variante ist die Komparatorschaltung 22 über eine Leitung 43 mit dem Eingangsanschluß 39 verbunden, an dem die von der Induktionsspule kommenden Spannungsimpulse erscheinen. Sie erzeugt in diesem Fall ein zu einem Zähl- und Speichervorgang führendes Impulserkennungssignal z.B. dann, wenn die Amplitude eines solchen Spanungsimpulses nach Durchlaufen eines positiven Maximalwertes einen vorgebbaren Pegel von oben nach unten durchläuft, da dies ein Hinweis darauf ist, dass der Kondensator 28 maximal geladen ist. Auf diese Weise werden generell nur Spannungsimpulse einer (hier: positiven) Polarität und damit ganze Umdrehungen bzw. vollständige Hin- und Herbewegungen gezählt. Vorteilhaft ist bei dieser Anordnung, dass jeder zu zählende unabhängig vom Ladezustand des Kondensators 28 erfassbar ist, den dieser unmittelbar vor dem Auftreten dieses Spannungsimpulses aufweist.

Bei einer zweiten Variante ist die Komparatorschaltung 22 über eine Leitung 44 mit dem Ausgang der Gleichrichterschaltung 24 verbunden, d.h. sie fragt die am Kondensator anliegende Spannung ab und erzeugt ein zu einem Zähl- und Speichervorgang führendes Impulserkennungssignal dann, wenn der beim Auftreten eines Spannungsimpulses ansteigende Absolutwert dieser Spannung einen vorgebbaren Pegel von unten nach oben überschreitet. Dieser Pegel wird so gewählt, dass er knapp unterhalb des durch die Spannungsbegrenzungsschaltung 26 vorgegebenen Maximalwertes liegt, sein Überschreiten also ebenfalls darauf hinweist, dass der Kondensator 28 (in Kürze) maximal geladen ist. Bei dieser Variante muß dafür gesorgt werden, dass die Spannung am Kondensator 28 vor dem Auftreten eines zu zählenden Spannungsimpulses unter den eben erläuterten Pegel abgesunken ist. Man wird daher in diesem Fall nur eine Einweg-Gleichrichterschaltung 24 verwenden und die Kapazität des Kondensators 28, sowie den durch die Spannungsbegrenzungsschaltung 26 vorgegebenen Maximalwert so auf den Strombedarf der aus dem Kondensator 28 zu versorgenden Schaltungseinheiten abstimmen, dass der Kondensator 28 nach der vollständigen Durchführung eines Zähl- und Speichervorgangs ausreichend weit entladen ist. Alternativ oder ergänzend hierzu kann parallel zum Kondensator 28 einen steuerbaren Schalter, z.B. in Form eines Schalttransistors vorgesehen werden, durch dessen Schließen der Kondensator 28 nach Beendigung eines jeden Zähl- und Speichervorgangs zwangsweise vollständig entladen wird.

Um zu verdeutlichen, dass von den beiden Leitungen 43, 44 immer nur eine vorhanden ist, sind sie durch strich-punktierte bzw. gestrichelte Linien dargestellt.

Zusätzlich zu den bereits beschriebenen Funktionen hat die durch ein Zenerdiodensymbol gekennzeichnete Spannungsbegrenzungsschaltung 26 die Aufgabe, die Ladespannung des Kondensators 28 auf einen Wert zu begrenzen, der insbesondere für die vorzugsweise als FRAM-Schaltung ausgebildete, nicht flüchtige Zähl- und Speicherschaltung 32 unkritisch ist. Zwar werden diese Schaltungen durch zu hohe Versorgungsspannungen nicht sofort zerstört, doch kann ihre Lebensdauer durch Überspannungen erheblich verkürzt werden.

Bei Anwendungsfällen, in denen eine besonders hohe Lebensdauer keine Rolle spielt, kann die Spannungsbegrenzungsschaltung 26 bei der ersten Variante, bei der die Komparatorschaltung über die Leitung 43 mit dem Eingangsanschluß 39 verbunden ist, auch weggelassen werden.

Eine FRAM-Zähl- und Speicherschaltung ist deshalb vorteilhaft, weil sie einerseits sehr wenig Energie für einen Zähl- und Speichervorgang benötigt und andererseits 10¹² bis 10¹³ Speicherzyklen ermöglicht. Deshalb kann jeder einzelne Spannungsimpuls nicht nur gezählt sondern auch sofort gespeichert werden. Bei Verwendung einer Speicher-Schaltungstechnologie, deren Lebensdauer auf eine wesentlich geringere Zahl von Speicherzyklen begrenzt ist, müßten dagegen die Zählvorgänge von den Speichervorgängen getrennt werden. Überdies müßte jeder Spannungsimpuls so viel Energie zu Verfügung stellen, dass ein flüchtiger Zähler auch bei längeren Zeitabständen (beispielsweise im Bereich von 1 sec.) zwischen aufeinanderfolgenden Spannungsimpulsen aus dem Kondensator versorgt werden könnte, ohne seinen Zählwert zu verlieren. Folgen bei dieser Technologie die zu zählenden Spannungsimpulse mit kleineren Zeitabständen aufeinander, weil die zu überwachende Bewegung wieder schneller abläuft, so müssen sie zwar einzeln gezählt, der Zählwert aber erst dann in dem nicht flüchtigen Speicher gespeichert werden, wenn der Kondensator bei wieder langsamer werdender Bewegung wegen des damit verbundenen längeren Ausbleibens eines weiteren Zählimpulses die erforderliche Versorgungsspannung zu verlieren droht. Wenn also z.B. der Kondensator bei jedem Spannungsimpuls so viel Energie erhält, dass im statistischen Mittel nur alle 100 Spannungsimpulse eine so lang Impulspause auftritt, dass die Versorgungsspannung zu stark abzufallen droht, beträgt die Zahl der Speichervorgänge nur ein Hundertstel der Zahl der zu zählenden Spannungsimpulse, wodurch sich die Gesamtlebensdauer des nicht flüchtigen Speichers entsprechend verlängert.

Mit andren Worten: Die sehr große Lebensdauer der FRAM-Schaltungen ermöglicht es jeden einzelnen Spannungsimpuls nicht nur zu zählen sondern den zugehörigen Zählwert auch jeweils sofort zu speichern und wegen des geringen Energiebedarfs Sensoranordnungen zu verwenden, die pro Spannungsimpuls vergleichsweise wenig elektrische Energie liefern, da keine Impulspausen überbrückt werden müssen.

Der Kondensator 28 dient als Energiespeicher, der nach dem Auftreten eines zu zählenden Spannungsimpulses sowohl die Steuerschaltung 30 als vor allem auch die nicht flüchtige Zähl- und Speicherschaltung 32 so lange mit elektrischer Energie versorgt, bis letztere diesen Spannungsimpuls sicher verarbeitet hat, so dass der Positionsgeber hinsichtlich der Zähl- und Speichervorgänge autark arbeitet und nicht auf eine externe Spannungsversorgung angewiesen ist.

Bei dem in Fig. 7 gezeigten Ausführungsbeispiel wird davon ausgegangen, dass von einem Verwender an den Anschluß 50 zu jedem beliebigen Zeitpunkt ein Abfragesignal angelegt werden kann, aufgrund dessen die Daten-Leseschaltung 34 den in der Zähl- und Speicherschaltung enthaltenen Zählerstand lesen und über die Datenleitung 54 an den Verwender gegebenenfalls in umkodierter und mit Protokollbits versehener Form abgeben, d.h. als Schnittstelle zu einem Verwender arbeiten soll. Es besteht somit die Möglichkeit, dass ein vom Verwender kommendes Abfragesignal und ein durch einen zu zählenden Spannungsimpuls ausgelöstes, von der Komparatorschaltung 22 abgegebenes Impulserkennungssignal gleichzeitig oder mit einem so kurzen zeitlichen Abstand auftreten, dass sich die durch sie ausgelösten Vorgänge gegenseitig stören könnten. Um dies zu verhindern ist die Steuerschaltung 30 vorgesehen, deren Aufbau und Funktionsweise unter Bezugnahme auf Fig. 8 noch genauer erläutert werden.

Da die Möglichkeit besteht, dass vor einem Zeitpunkt, in dem das Abfragesignal angelegt wird, seit längerer Zeit kein Zählvorgang mehr stattgefunden hat, und der Kondensator 28 somit keine elektrische Energie zur Verfügung stellen kann, wird eine an die Anschlüsse 48, 49 anzulegende, externe Energieversorgung für die Steuerschaltung 30 und die Daten-Leseschaltung 34 benötigt. Die Diode 37 sorgt dafür, dass der Kondensator 28 keinesfalls als Energiequelle für die Daten-Leseschaltung 34 dient, während die Diode 36 verhindert, dass durch das Anlegen der externen Energieversorgung der Kondensator 28 aufgeladen bzw. in der Zähl- und Speicherschaltung ein fehlerhafter Zähl- und Speichervorgang ausgelöst wird.

Ein Lesevorgang wird durch ein Lesesignal eingeleitet, das vom Eingang 50 des IC-Bausteins 20 her über die Leitung 51 der Steuerschaltung 30 und der Daten-Leseschaltung 34 zugeführt wird. Wird als Daten-Leseschaltung 34 eine I²C-Schnittstelle verwendet, so verzögert diese nach dem Auftreten eines Lesesignals ihren über die Leitung 46 erfolgenden Zugriff auf die Zähl- und Speicherschaltung 32 standardmäßig um eine festgelegte Zeitspanne, was in den Fig. 7 und 8 durch ein in der Leitung 46 liegendes Verzögerungsglied 47 symbolisiert ist. Nach dieser Verzögerungszeit wird der in der Zähl- und Speicherschaltung 32 enthaltene Zählerstand über die Datenleitung 52 an die Daten-Leseschaltung 34 übertragen.

Die Datenleitung 54 kann auch Teil einer Busleitung sein oder durch eine Funkverbindung zwischen einem in der Daten-Leseschaltung 34 enthaltenen, nicht dargestellten Sender und einem beim Verwender befindlichen Empfänger ersetzt werden. Da im allgemeinen einem Empfänger mehrere Positionsgeber mit jeweils einem Sender zugeordnet sind, wie dies beispielsweise bei der zentralisierten Erfassung von Umdrehungen von Wasser- oder Gaszählern oder dergl. der Fall ist, muß jeder Positionsgeber nicht nur den jeweiligen Zählerstand sondern auch bei ihm gespeicherte, ihn eindeutig identifizierende Kenndaten an den zentralen Verwender senden. Bei der Initiierung des Systems können diese Kenndaten sowie ein Ausgangs-Zählerstand durch die Daten-Leseschaltung 34 in die der Zähl- und Speicherschaltung 32 eingelesen werden. Dies wird durch den in Gegenrichtung weisenden Pfeil 53 in der Datenleitung 52 symbolisiert.

Aufgabe der Steuerschaltung 30 ist es, bei einem zeitlichen Zusammentreffen zwischen einem Zähl- und Speichervorgang einerseits und einem Lesevorgang andererseits eine gegenseitige Störung zu verhindern, da, wie erwähnt, diese beiden Ereignisarten voneinander völlig unabhängig jederzeit auftreten können.

Wie Fig. 8 zeigt, umfaßt die Steuerschaltung 30 zu diesem Zweck folgende Bestandteile:
- Einen ersten Speicher 70, der als Flip-Flop ausgebildet sein kann, das normalerweise zurückgesetzt ist (logisch Null am Q-Ausgang) und durch ein über die Leitung 71 von der Komparatorschaltung 22 an seinen Takteingang gelegtes Impulserkennungssignal gesetzt wird, so dass es an seinem Q-Ausgang eine als Zählsignalpegel dienende logische Eins abgibt,
- einen zweiten Speicher 72, der als Flip-Flop ausgebildet sein kann, das normalerweise zurückgesetzt ist (logisch Eins am Q̅ -Ausgang) und durch ein über die Leitung 51 an seinen Takteingang gelegtes Abfragesignal gesetzt wird, so dass es an seinem Q̅ -Ausgang eine als Sperrsignalpegel dienende logische Null abgibt,
- eine Sperrschaltung 74, die als UND-Gatter mit zwei Eingängen ausgebildet sein kann, von denen der eine mit dem Q-Ausgang des ersten Speichers 70 und der andere mit dem Ausgang eines ODER-Gatters 75 verbunden ist, von dessen beiden Eingängen der eine mit dem Q̅-Ausgang des zweiten Speichers 72 und der andere mit dem Ausgang der Sperrschaltung 74 verbunden ist. Dieser Ausgang steuert weiterhin den einen Eingang eines UND-Gatters 77 direkt und den anderen Eingang dieses UND-Gatters 77 über ein Verzögerungsglied 78 an. Die Sperrschaltung 74 gibt einen vom ersten Speicher 70 kommenden Zählsignalpegel über das UND-Gatter 77 und die Leitung 76 nur dann an einen flankenempfindlichen Zähleingang der Zähl- und Speicherschaltung 32 zur Auslösung eines Zähl- und Speichervorgangs weiter, wenn an ihrem anderen Eingang kein Sperrsignalpegel anliegt.

Nach Beendigung des Speichervorgangs in der Zähl- und Speicherschaltung 32 wird von dieser auf der Leitung 79 ein Rücksetzimpuls an den ersten Speicher 70 gegeben, und nach Beendigung der Datenausgabe an den Verwender wird von der Daten-Leseschaltung 34 auf der Leitung 80 ein Rücksetzimpuls an den zweiten Speicher 72 gegeben.

Das UND-Gatter 77, das Verzögerungsglied 78 und das ODER-Gatter 75 bilden eine Spikes-Fallen- und Halteschaltung, die dann, wenn ein Zählsignalpegel und ein Sperrsignalpegel nahezu gleichzeitig auftreten, das Erscheinen undefinierter Spikes am Eingang der Zähl- und Speicherschaltung verhindert.

Die Funktionsweise der Steuerschaltung 30 ist folgende:
Gibt die Komparatorschaltung auf der Leitung 71 ein Impulserkennungssignal ab, so wird der erste Speicher 70 gesetzt.

Ist der zweite Speicher 72 nicht gesetzt, weil kein unmittelbar vorausgehendes Abfragesignal über die Leitung 51 angelegt wurde, so hält die logische Eins an seinem Q̅ -Ausgang die Sperrschaltung 74 geöffnet und der am Q-Ausgang des ersten Speichers 70 erscheinende Zählsignalpegel gelangt über das UND-Gatter 77 mit einer durch das Verzögerungsglied 78 bewirkten, sehr kurzen Verzögerung an die Zähl- und Speicherschaltung 32 und löst dort einen Zähl- und Speichervorgang aus.

Kommt kurze Zeit später ein Abfragesignal auf der Leitung 51, so wird zwar der zweite Speicher 72 gesetzt, doch bleibt die dadurch an seinem Q̅ -Ausgang erscheinende logische Null unwirksam, da das ODER-Gatter 75 die am Ausgang der Sperrschaltung 74 als Zählsignalpegel vorhandene logische Eins an den zweiten Eingang der Sperrschaltung 74 legt, so dass diese sich selbst hält, solange der erste Speicher 70 nicht zurückgesetzt wird. Dieses kurze Zeit nach einem Impulser-kennungssignal auftretende Abfragesignal kann den gerade laufenden Zähl- und Speichervorgang nicht stören, da, wie bereits erwähnt, die Daten-Leseschaltung 34 auf die Zähl- und Speicherschaltung 32 mit der durch das Verzögerungsglied 47 symbolisierten Verzögerungszeit zugreift, die so groß ist, dass auch bei extrem kurzem Abstand zwischen Impulserkennungssignal und nachfolgendem Abfragesignal der Zähl- und Speichervorgang mit Sicherheit beendet ist, wenn der Zugriff durch die Daten-Leseschaltung 34 erfolgt.

Ist jedoch beim Setzen des ersten Speichers 70 der zweite Speicher 72 bereits gesetzt, weil vor dem Impulserkennungssignal ein Abfragesignal aufgetreten ist, so sperrt die logische Null am Q̅ -Ausgang des gesetzten zweiten Speichers 72 über das ODER-Gatter 75 die Sperrschaltung 74 und der am Q-Ausgang des ersten Speichers 70 erscheinende Zählsignalpegel bleibt solange unwirksam, bis ein von der Daten-Leseschaltung über die Leitung 80 kommendes, die erfolgreiche Beendigung des Daten-Lesevorgangs anzeigendes Signal den zweiten Speicher 72 zurücksetzt, wodurch die Sperrschaltung 74 freigegeben wird und der "zwischengespeicherte" Zählsignalpegel in der oben beschriebenen Weise einen Zähl- und Speichervorgang auslösen kann.

Tritt ein Impulserkennungssignal mit so kurzem zeitlichen Abstand nach einem Abfragesignal auf, dass zwar der Signalpegel am Ausgang der Sperrschaltung 74 noch kurz ansteigt, das ODER-Gatter aber die Sperrschaltung 74 dann doch schließt, so wird der dadurch entstehende "Spike" durch die von dem Verzögerungsglied 78 und dem UND-Gatter 77 gebildete Spikes-Falle unterdrückt.

Da die Steuerschaltung 30 sowohl dann arbeiten muß, wenn ein zu zählender Spannungsimpuls auftritt aber keine externe Versorgungsspannung an die Anschlüsse 48, 49 gelegt ist, als auch dann, wenn eine Abfrage erfolgen soll, ohne dass der Kondensator 28 eine ausreichende Versorgungsspannung liefert, ist sie mit den beiden Energiequellen verbunden, wobei, wie bereits erwähnt, die Dioden 36, 37 zur Entkoppelung dienen.

Die in Figur 9 gezeigte Verarbeitungselektronik für einen erfindungsgemäßen Positionsdetektor umfaßt in der gleichen Weise, wie dies unter Bezugnahme auf Figur 7 erläutert wurde, eine Gleichrichterschaltung 24, einen Kondensator 28, eine Spannungsbegrenzungsschaltung 26, eine Komparatorschaltung 22, die entweder über die Leitung 43 die an den Eingangsanschlüssen 39, 40 auftretenden Spannungsimpulse oder über die Leitung 44 die am Kondensator 28 anliegende Spannung abfragt, um ein Impulserkennungssignal abzugeben, das hier anders als bei dem zuvor beschriebenen Ausführungsbeispiel - und das ist wichtig - nicht über eine Steuerschaltung sondern unmittelbar über die Leitung 71 an den Zähleingang einer nicht flüchtigen Zähl- und Speicherschaltung 32 gelangt, über deren Datenleitung 52 der jeweils erreichte Zählerstand an eine Daten-Leseschaltung 34' abgegeben werden kann, die diese Daten über eine Datenleitung 54, die auch eine Funkstrecke sein kann, gewünschtenfalls in umkodierter und mit Protokollbits versehener Form an einen Verwender weiter gibt.

Ansonsten gilt hier das in Verbindung mit Figur 7 für diese Schaltungsteile Gesagte in gleicher Weise, so dass auf eine erneute Beschreibung verzichtet werden kann.

Der wesentliche Unterschied zu dem zuvor beschriebenen Ausführungsbeispiel besteht darin, dass hier die Weitergabe der Daten nicht in Reaktion auf ein vom Verwender kommendes Abfragesignal erfolgt, das zu jedem beliebigen Zeitpunkt auftreten kann, sondern von der Steuerschaltung 30' durch ein auf der Leitung 82 an die Daten-Leseschaltung angelegtes Signal ausgelöst wird, das gegen die zu zählenden Spannungsimpulse so zeitversetzt erzeugt wird, dass es zu keiner gegenseitigen Störung zwischen dem Zähl- und Speichervorgang einerseits und dem Lesevorgang andererseits kommen kann.

Ein wesentlicher Vorteil dieses Konzeptes liegt darin, dass die gesamte Verarbeitungselektronik autark, das heißt von einer externen Versorgung mit elektrische Energie völlig unabhängig arbeiten kann.

Zu diesem Zweck umfaßt die Schaltungsanordnung eine weitere Gleichrichterschaltung 24', die so gepolt ist, dass sie mit den Spannungsimpulsen, die eine zu den zu zählenden Spannungsimpulsen entgegengesetzte Polarität besitzen, einen weiteren Kondensator 28' auflädt, dessen Ladespannung mit Hilfe einer weiteren Komparatorschaltung 22' überprüft wird. Immer dann, wenn diese Ladespannung einen vorgegebenen Pegel überschreitet, gibt die Komparatorschaltung 22' auf der Leitung 71' ein Signal an die Steuerschaltung 30', die darauf hin über die Leitungen 82, 83 die Daten-Leseschaltung 34' bzw. die Zähl- und Speicherschaltung 32 für einen Lesevorgang über die Datenleitung 52 und eine nachfolgende Weitergabe der Daten auf der Datenleitung 54 ansteuert.

Da das Überschreiten des vorgegebenen Pegels der Ladespannung des weiteren Kondensators 28' immer nur dann auftreten kann, wenn ein Spannungsimpuls erscheint, dessen Polarität der Polarität der zu zählenden Spannungsimpulse entgegengesetzt ist, kann es zu keiner zeitlichen Kollision zwischen den Zähl- und Speichervorgängen einerseits und den Lesevorgängen andererseits kommen. Die Steuerschaltung 30' kann daher wesentlich einfacher aufgebaut sein, als dies für die Steuerschaltung 30 beschrieben wurde, da sie nach ihrer Ansteuerung durch die Komparatorschaltung 22' lediglich für die richtige zeitliche Reihenfolge der Steuersignale an die Zähl- und Speicherschaltung 32 und die Daten-Abfrageschaltung 34' sorgen muß.

Wenn die Daten-Abfrageschaltung 34' einen Sender umfaßt, der für die Weitergabe der Daten an den Verwender wesentlich mehr elektrische Energie benötigt, als in einem Spannungsimpuls enthalten ist, kann der weitere Kondensator 28' so groß ausgelegt werden, dass er die Ladungen einer Vielzahl solcher Impulse integriert. Der von der Komparatorschaltung 22' abgefragte Pegel wird dann so gewählt, dass er erst dann überschritten wird, wenn der Kondensator durch eine entsprechend große Anzahl von Spannungsimpulsen aufgeladen worden ist. In diesem Fall wird der weitere Kondensator 28' im allgemeinen nicht in dem IC-Baustein enthalten sein, zu dem die übrigen Schaltungsteile vorzugsweise zusammengefaßt sind.

Wird umgekehrt von der Daten-Leseschaltung 34' nur sehr wenig Energie benötigt, um die gespeicherten und verarbeiteten Daten an den Verwender weiterzugeben, so kann die Stromversorgung sowohl der Steuerschaltung 30' als auch der Daten-Leseschaltung 34' aus dem Kondensator 28 erfolgen. Der Gleichrichter 24 ist dann vorzugsweise als Grätz-Brücke ausgebildet, während der weitere Gleichrichter 24', der weitere Kondensator 28' und die weitere Komparatorschaltung 22' weggelassen werden können. Die Steuerschaltung 30' kann dann beispielsweise einen Daten-Lesevorgang dadurch ohne Kollisionsgefahr auslösen, daß sie nach der Durchführung eines jeden Zähl- und Speichervorgangs unter Wahrung eines zeitlichen Sicherheitsabstandes ein entsprechendes Steuersignal abgibt.

Eine andere Möglichkeit besteht darin, zwei Komparatoren 22 und 22' zu verwenden, die beide die an den Eingängen 39, 40 erscheinenden Spannungsimpulse so abfragen, daß der eine Komparator 22 ein Impulserkennungssignal beispielsweise beim Auftreten eines jeden positiven Spannungsimpulses und der andere Komparator 22' ein einen Daten-Lesevorgang auslösendes Signal beim Auftreten eines jeden negativen Spannungsimpulses abgibt, wodurch ebenfalls eine gegenseitige Störung vermieden wird.

Es sei ausdrücklich darauf hingewiesen, dass die Elektronik eines erfindungsgemäßen Positionsdetektors nicht notwendiger Weise in unmittelbarer Nähe des Sensorteils (bestehend aus wenigsten einem Erregermagneten, einem ferromagnetischen Element und einer Induktionsspule) angeordnet sein muß. Vielmehr kann zwischen den Anschlüssen 8 der Induktionsspule 7 und den Eingangsanschlüssen 39, 40 der Elektronik eine so lange Leitung vorgesehen werden, dass die Elektronik näher beim Verwender als beim Sensorteil liegt, wobei die Datenleitung 54 dann entsprechend kurz ist. Auch in diesem Fall bilden Sensorteil und Elektronik einen einheitlichen Positionsdetektor im Sinne der vorliegenden Erfindung.

Wenn man dem ferromagnetischen Element 6 eine weitere Induktionsspule oder z.B. eine Hall-Sonde oder eine Feldplatte zuordnet, so dass der Sensorteil des erfindungsgemäßen Positionsdetektors beispielsweise aus einer Reed-Kontaktanordnung und einer Hall-Sonde oder einer anderen Kombination dier eben genannten Bauteile besteht, kann die Rotationsund/oder Translationsbewegung auch in beiden Richtungen zählend erfasst werden.

## Patentansprüche

1. Positionsdetektor, der für das zählende Erfassen von Rotations- und/oder Translationsbewegungen in vorzugsweise einer vorgebbaren Richtung folgende Bestandteile aufweist:
mindestens einen Erregermagneten (2),
ein einziges ferromagnetisches Element (6), und
wenigstens eine dem ferromagnetischen Element (6) zugeordnete Induktionsspule (7),
wobei die zu erfassende Bewegung durch eine Relativbewegung zwischen dem Erregermagneten (2) und dem ferromagnetischen Element (6) dargestellt und die während der Annäherung zwischen diesen beiden Elementen aus der kinetischen Energie der zu erfassenden Bewegung entnommene und mit Hilfe des ferromagnetischen Elements (6) akkumulierte Energie beim Erreichen einer bestimmten Relativstellung und damit einer bestimmten magnetischen Feldstärke schlagartig freigesetzt wird und durch die plötzliche Änderung des Magnetflusses in der Induktionsspule (7) ein Spannungsimpuls erzeugt wird,
sowie als Elektronik
wenigstens eine Gleichrichterschaltung (24) zum Gleichrichten von Spannungsimpulsen der Induktionsspule (7),
wenigstens einen Kondensator (28), der durch gleichgerichtete Spannungsimpulse aufladbar ist,
wenigstens eine Komparatorschaltung (22), die beim Auftreten eines zu zählenden Spannungsimpulses ein Impulserkennungssignal erzeugt,
eine nicht flüchtige Zähl- und Speicherschaltung (32), die von einem als Speicher ausgebildeten Register eines Zählers gebildet wird und für jedes Impulserkennungssignal einen Zähl- und Speichervorgang durchführt, wobei die im Kondensator (28) gespeicherte elektrische Energie zur Stromversorgung zumindest der nicht flüchtigen Zähl- und Speicherschaltung (32) dient,
eine Daten-Leseschaltung (34, 34'), die zur Weiterverarbeitung und Ausgabe der in der nicht flüchtigen Zähl- und Speicherschaltung (32) gespeicherten Daten an einen externen Verwender dient, und
eine Steuerschaltung (30, 30'), die eine Störung des Zähl- und Speichervorgangs durch das Arbeiten der Daten-Leseschaltung (34, 34') und umgekehrt dadurch verhindert,
dass sie entweder die Daten-Leseschaltung (34') für eine Weiterverarbeitung und Ausgabe der in der nicht flüchtigen Zähl- und Speicherschaltung (32) gespeicherten Daten unabhängig von einer vom Verwender kommenden Anforderung ansteuert und dass dabei auch die Steuerschaltung (30') und die Daten-Leseschaltung (34') mit elektrischer Energie versorgt werden, die aus der zu überwachenden Bewegung gewonnen und in der Elektronik gespeichert ist (synchroner Betrieb), oder
dass sie dann, wenn ein Lesevorgang eingeleitet ist und abläuft und somit die Daten-Leseschaltung (34) aufgrund eines zu einem beliebige Zeitpunkt von einem Verwender kommenden Abfragesignals einen Daten-Lesevorgang der in der nicht flüchtigen Zähl- und Speicherschaltung (32) gespeicherten Daten durchführt, wobei Schaltungsteile, die für den Lesevorgang benötigt werden, zumindest für den hierfür benötigten Zeitraum mit externer elektrischer Energie versorgt werden, beim Auftreten eines Impulserkennungssignals, wobei das Impulserkennungssignal beim Auftreten eines zu zählenden Spannungsimpulses von der wenigstens einen Komparatorschaltung (22) erzeugt wird, einen von der nicht flüchtigen Zähl- und Speicherschaltung (32) durchzuführenden Zähl- und Speichervorgang nicht zulässt sondern für dessen Zwischenspeicherung und Verarbeitung nach Beendigung des Daten-Lesevorgangs sorgt (asynchroner Betrieb).

2. Positionsdetektor nach Anspruch 1, **dadurch gekennzeichnet, dass** für die Energieversorgung der Daten-Leseschaltung (34') im synchronen Betrieb ein weiterer Kondensator (28') vorgesehen ist, der über eine weitere Gleichrichterschaltung (24') durch von der Induktionsspule (7) abgegebene Spannungsimpulse mit einer zu den zu zählenden Impulsen entgegengesetzten Polarität aufladbar ist, und dass die Steuerschaltung (30') die Daten-Leseschaltung (34') für eine Weiterverarbeitung und Ausgabe der in der nicht flüchtigen Zähl- und Speicherschaltung (32) gespeicherten Daten nur dann ansteuert, wenn der weitere Kondensator (28') eine dadurch einen weiteren Komparator (22') erkannte Ladespannung erreicht hat und kein Zähl- und Speichervorgang abläuft, wobei die Daten-Leseschaltung (34'), der weitere Komparator (22') und die Steuerschaltung (30') von dem weiteren Kondensator (28') mit elektrischer Energie versorgt werden.

3. Positionsdetektor nach Anspruch 1 oder 2, **dadurch gekennzeichnet, dass** die Komparatorschaltung (22) das Impulserkennungssignal erzeugt, wenn die Amplitude eines von der Induktionsspule (7) kommenden Spannungsimpulses nach Durchlaufen des Scheitelwertes einen vorgebbaren Pegel durchläuft und dass dieses Impulserkennungssignal die Durchführung eines Zähl- und Speichervorgangs bewirkt.

4. Positionsdetektor nach Anspruch 1 oder 2, **dadurch gekennzeichnet, dass** die Komparatorschaltung (22) das Impulserkennungssignal erzeugt, wenn der ansteigende Absolutwert der Spannung an dem wenigstens einen Kondensator (28) einen vorgebbaren Pegel durchläuft, dass dieses Impulserkennungssignal die Durchführung eines Zähl- und Speichervorgangs bewirkt, und dass eine Spannungsbegrenzungsschaltung (26) vorgesehen ist, welche die Kondensatorspannung auf einen vorgebbaren Höchstwert begrenzt, wobei dieser Höchstwert und die Kapazität des wenigstens einen Kondensators (28) so auf den bei der Durchführung eines einzelnen Zähl- und Speichervorgangs auftretenden Energieverbrauch der hieran beteiligten Schaltungsteile (30, 32) abgestimmt sind, dass der Kondensator (28) nach Beendigung des Zähl- und Speichervorgangs so weit entladen ist, dass die Komparatorschaltung (22) beim Wiederaufladen des Kondensators erneut ein Impulserkennungssignal erzeugt.

5. Positionsdetektor nach Anspruch 1 oder 2, **dadurch gekennzeichnet, dass** die Komparatorschaltung (22) das Impulserkennungssignal erzeugt, wenn der ansteigende Absolutwert der Spannung an dem wenigstens einen Kondensator (28) einen vorgebbaren Pegel durchläuft, dass dieses Impulserkennungssignal die Durchführung eines Zähl- und Speichervorgangs bewirkt, und dass eine den wenigstens einen Kondensator (28) nach der Durchführung eines jeden Zähl- und Speichervorgangs entladende Entladeschaltung vorgesehen ist.

6. Positionsdetektor nach Anspruch 1 oder einem der Ansprüche 3 bis 5 soweit diese auf Anspruch 1 rückbezogen sind, **dadurch gekennzeichnet, dass** die Steuerschaltung folgende Bestandteile umfaßt
- einen ersten Speicher (70), der beim Auftreten eines Impulserkennungssignals gesetzt wird und einen Zählsignalpegel abgibt,
- einen zweiten Speicher (72), der beim Auftreten eines Abfragesignals gesetzt wird und einen Sperrsignalpegel abgibt
- eine Sperrschaltung (74) mit zwei Eingängen, von denen der eine mit dem Ausgang des ersten Speichers (70) und der andere mit dem Ausgang des zweiten Speichers (72) verbunden ist und die den Zählsignalpegel an einen flankenempfindlichen Zähleingang der Zähl- und Speicherschaltung (32) zur Auslösung eines Zähl- und Speichervorgangs nur dann durchläßt wenn an ihrem anderen Eingang kein Sperrsignalpegel anliegt
- dass nach Beendigung des Speichervorgangs in der Zähl- und Speicherschaltung (32) ein Rücksetzimpuls an den ersten Speicher (70) gegeben wird, und
- dass nach Beendigung der Datenausgabe an den Verwender ein Rücksetzimpuls an den zweiten Speicher (72) gegeben wird
wobei die Steuerschaltung (30) je nach Verfügbarkeit aus der externen Energieversorgung oder dem wenigstens einen Kondensator (28) mit elektrischer Energie versorgt wird.

7. Positionsdetektor nach Anspruch 1 oder 2, **dadurch gekennzeichnet, dass** die Gleichrichterschaltung (24, 24') aus nur einer Diode besteht.

8. Positionsdetektor nach Anspruch 1 oder 2, **dadurch gekennzeichnet, dass** die Gleichrichterschaltung (24, 24') aus einem Schalttransistor besteht, der zwischen einem Durchlaßzustand, in dem an ihm eine minimale Durchlaßspannung abfällt, und einem Sperrzustand, in dem er keinen Strom durchläßt, hin und her schaltbar ist.

9. Positionsdetektor nach Anspruch 1 oder 2, **dadurch gekennzeichnet, dass** die Gleichrichterschaltung (24) eine Grätz-Brückenschaltung ist, von deren Dioden jeweils zwei durch zu ihnen parallel liegende Transistoren kurzschließbar sind.

10. Positionsdetektor nach einem der vorhergehenden Ansprüche, **dadurch gekennzeichnet, dass** die nicht flüchtige Zähl- und Speicherschaltung (32) ein FRAM ist.

11. Positionsdetektor nach einem der vorhergehenden Ansprüche, **dadurch gekennzeichnet, dass** das ferromagnetische Element (6) ein Impulsdraht ist.

12. Positionsdetektor nach einem der Ansprüche 1 bis 10, **dadurch gekennzeichnet, dass** das ferromagnetische Element (6) ein Wiegand-Draht ist.

13. Positionsdetektor nach einem der vorhergehenden Ansprüche, **dadurch gekennzeichnet, dass** die Schaltungseinheiten der Elektronik und, soweit vorhanden, die Spannungsbegrenzungsschaltung (26), die weitere Gleichrichterschaltung (24') und der weitere Kondensator (28') in einem integrierten Schaltungsbaustein (20) zusammengefasst sind.

14. Positionsdetektor nach einem der Ansprüche 1 bis 12, **dadurch gekennzeichnet, dass** zumindest einige der Schaltungseinheiten der Elektronik und/oder, soweit vorhanden, die Spannungsbegrenzungsschaltung (26), die weitere Gleichrichterschaltung (24') und der weitere Kondensator (28') in einem integrierten Schaltungsbaustein (20) zusammengefaßt sind.

15. Positionsdetektor nach einem der vorhergehenden Ansprüche, **dadurch gekennzeichnet, dass** der Erregermagnet (2) und das ferromagnetische Element (6) mit ihren Längsachsen (3, 10) in zwei parallelen Ebenen liegen deren gemeinsame Normale die Drehachse (4) ist.

16. Positionsdetektor nach einem der Ansprüche 1 bis 14, **dadurch gekennzeichnet, dass** die geometrischen Schwerpunkte von zwei eine entgegengesetzte Polarität aufweisenden Erregermagneten (3, 9) und des ferromagnetischen Elements (6) in einer Ebene liegen, deren Normale die Drehachse (4) ist und dass die Längsachsen (3, 10) dieser Elemente parallel zur Drehachse (4) verlaufen.

17. Positionsdetektor nach einem der Ansprüche 1 bis 14, **dadurch gekennzeichnet, dass** der Erregermagnet (2) und das ferromagnetische Element (6) in einer Ebene liegen, deren Normale die Drehachse (4) ist, und dass das ferromagnetische Element (6) und der Erregermagnet (2) radial zur Drehachse (4) angeordnet sind.

18. Positionsdetektor nach einem der Ansprüche 1 bis 14, **dadurch gekennzeichnet, dass** der Erregermagnet (2) und das ferromagnetische Element (6) in einer Ebene liegen und senkrecht zueinander ausgerichtet sind.

19. Positionsdetektor nach einem der Ansprüche 2 bis 18, **dadurch gekennzeichnet, dass** der Daten-Leseschaltung (34') ein Sender zugeordnet ist, der über eine Funkstrecke die Daten aus der Zähl- und Speichereinheit (32) einer Empfangsschaltung beim Verwender zur Verfügung stellt.

20. Positionsdetektor nach einem der vorhergehenden Ansprüche, **dadurch gekennzeichnet, dass** die Daten-Leseschaltung (34, 34') auch zum Einlesen von Kenndaten in die nicht flüchtige Zähl- und Speicherschaltung (32) dient.

## Claims

1. A position detector which for countingly detecting rotational and/or translatory movements in preferably a predeterminable direction comprises the following component parts:
at least one exciter magnet (2),
a single ferromagnetic element (6), and
at least one induction coil (7) associated with the ferromagnetic element (6),
wherein the movement to be detected is represented by a relative movement between the exciter magnet (2) and the ferromagnetic element (6) and the energy which is taken from the kinetic energy of the movement to be detected during the approach as between those two elements and accumulated by means of the ferromagnetic element (6) Is abruptly liberated upon the attainment of a given relative position and thus a given magnetic field strength and a voltage pulse is produced by the sudden change in the magnetic flux in the induction coil (7),
and as an electronic system:
at least one rectifier circuit (24) for rectifying voltage pulses of the induction coil (7),
at least one capacitor (28) which can be charged up by rectified voltage pulses,
at least one comparator circuit (22) which produces a pulse recognition signal upon the occurrence of a voltage pulse to be counted,
a non-volatile counting and memory circuit (32) which is formed by a register, in the form of a memory, of a counter and executes a counting and storage operation for each pulse recognition signal, wherein the electrical energy stored in the capacitor (28) serves for the power supply at least of the non-volatile counting and memory circuit (32),
a data read circuit (34, 34') which serves for further processing and output of the data stored in the non-volatile counting and memory circuit (32) to an external user, and
a control circuit (30, 30') which prevents interference with the counting and storage operation by operation of the data read circuit (34, 34') and vice-versa in that
it either actuates the data read circuit (34') for further processing and output of the data stored in the non-volatile counting and memory circuit (32) independently of a demand coming from the user and in that respect also the control circuit (30') and the data read circuit (34') are supplied with electrical energy which is obtained from the movement to be monitored and is stored in the electronic system (synchronous operation), or
, when a reading operation was initiated and is running, and thus the data read circuit (34) by virtue of an enquiry signal coming from a user at any moment in time performs a data reading operation of the data stored in the non-volatile counting and memory circuit (32), wherein circuit parts which are required for the reading operation are supplied, at least for the correspondingly required period, with external energy, it, upon the occurrence of a pulse recognition signal wherein the pulse recognition signal is generated by the comparator circuit when a voltage pulse to be counted occurs, does not allow a counting and storage operation to be performed by the non-volatile counting and memory circuit (32) but provides for its intermediate storage and processing after termination of the data reading operation (asynchronous operation).

2. A position detector according to claim 1 **characterised in that** provided for the energy supply for the data read circuit (34') in the synchronous operation is a further
capacitor (28') which by way of a further rectifier circuit (24') can be charged up by voltage pulses delivered by the induction coil (7) with a polarity opposite to the pulses to be counted, and the control circuit (30') actuates the data read circuit (34') for further processing and output of the data stored in the non-volatile counting and memory circuit (32) only when the further capacitor (28') has reached a charging voltage which is thereby recognised by a further comparator (22') and no counting and storage operation takes place, wherein the data read circuit (34'), the further comparator (22') and the control circuit (30') are supplied with electrical energy by the further capacitor (28').

3. A position detector according to claim 1 or 2 **characterised in that** the that the comparator circuit (22) produces the pulse recognition signal when the amplitude of a voltage pulse coming from the induction coil (7), after passing through the peak value, passes through a predeterminable level, and said pulse recognition signal causes implementation of a counting and storage operation.

4. A position detector according to claim 1 or 2 **characterised in that** the comparator circuit (22) produces the pulse recognition signal when the rising absolute value of the voltage at the at least one capacitor (28) passes through a predeterminable level, said pulse recognition signal causes implementation of a counting and storage operation, and there is provided a voltage limiting circuit (26) for limiting the capacitor voltage to a predeterminable maximum value, wherein said maximum value and the capacitance of the at least one capacitor (28) are matched to the energy consumption, which occurs upon the implementation of a single counting and storage operation, of the circuit parts (30, 32) involved therein, in such a way that after the conclusion of the counting and storage operation the capacitor (28) is discharged to such an extent that upon re-charging of the capacitor the comparator circuit (22) again produces a pulse recognition signal.

5. A position detector according to claim 1 or 2 **characterised in that** the comparator circuit (22) produces the pulse recognition signal when the rising absolute value of the voltage at the at least one capacitor (28) passes through a predeterminable level, said pulse recognition signal causes the implementation of a counting and storage operation, and there is provided a discharge circuit for discharging the at least one capacitor (28) after the implementation of each counting and storage operation.

6. A position detector according to claim 1 or one of the claims 3 to 5 insofar as appendant to claim 1, **characterised in that** the control circuit includes the following component parts:
a first memory (70) which upon the occurrence of a pulse recognition signal is set and delivers a counting signal level,
a second memory (72) which upon the occurrence of an inquiry signal is set and delivers a blocking signal level,
a blocking circuit (74) having two inputs of which one is connected to the output of the first memory (70) and the other is connected to the output of the second memory (72) and which passes the counting signal level to an edge-sensitive counting input of the counting and memory circuit (32) for triggering a counting and storage operation only when no blocking signal level occurs at its other input,
after conclusion of the storage operation in the counting and memory circuit (32) a reset pulse is applied to the first memory (70), and
after conclusion of the data output to the user a reset pulse is applied to the second memory (72),
wherein depending on respective availability the control circuit (30) is supplied with electrical energy from the external energy supply or the at least one capacitor (28).

7. A position detector according to claim 1 or claim 2 **characterised in that** the rectifier circuit (24, 24') consists of only one diode.

8. A position detector according to claim 1 or claim 2 **characterised in that** the rectifier circuit (24, 24') comprises a switching transistor which is switchable between a forward state in which a minimum forward voltage is dropped thereat and a.blocking state in which it does not pass any current.

9. A position detector according to claim 1 or claim 2 **characterised in that** the rectifier circuit (24) is a Grätz bridge circuit, of the diodes of which two respective diodes are short-circuitable by transistors connected in parallel relationship therewith.

10. A position detector according to one of the preceding claims **characterised in that** the non-volatile counting and memory circuit (32) is a FRAM.

11. A position detector according to one of the preceding claims **characterised in that** the ferromagnetic element (6) is a pulse wire.

12. A position detector according to one of claims 1 to 10 **characterised in that** the ferromagnetic element (6) is a Wiegand wire.

13. A position detector according to one of the preceding claims **characterised in that** the circuit units of the electronic system and if present the voltage limiting circuit (26), the further rectifier circuit (24') and the further capacitor (28') are combined together in an integrated circuit component (20).

14. A position detector according to one of claims 1 to 12 **characterised in that** at least some of the circuit units of the electronic system and/or if present the voltage limiting circuit (26), the further rectifier circuit (24') and the further capacitor (28') are combined together in an integrated circuit component (20).

15. A position detector according to one of the preceding claims **characterised in that** the exciter magnet (2) and the ferromagnetic element (6) are disposed with their longitudinal axes (3, 10) in two parallel planes whose common normal is the axis of rotation (4).

16. A position detector according to one of claims 1 to 14, **characterised in that** the geometrical centroids of two exciter magnets (3, 9) of opposite polarity and of the ferromagnetic element (6) are in a plane whose normal is the axis of rotation (4), and the longitudinal axes (3, 10) of said elements extend in parallel relationship with the axis of rotation (4).

17. A position detector according to one of claims 1 to 14, **characterised in that** the exciter magnet (2) and the ferromagnetic element (6) are in a plane whose normal is the axis of rotation (4), and the ferromagnetic element (6) and the exciter magnet (2) are arranged in radial relationship with the axis of rotation (4).

18. A position detector according to one of claims 1 to 14, **characterised in that** the exciter magnet (2) and the ferromagnetic element (6) are in a plane and are oriented in mutually perpendicular relationship.

19. A position detector according to one of claims 2 to 18, **characterised in that** associated with the data read circuit (34') is a transmitter which by way of a radio section makes the data from the counting and memory unit (32) available to a receiver circuit at the user.

20. A position detector according to one of the preceding claims **characterised in that** the data read circuit (34, 34') also serves for reading identification data into the non-volatile counting and memory circuit (32).

## Revendications

1. Détecteur de position qui, pour la saisie par comptage de mouvements de rotation et/ou de translation, préférentiellement dans une direction pré-définissable, comprend les pièces constitutives suivantes :
au moins un aimant d'excitation (2),
un élément ferromagnétique (6) unique, et
au moins une bobine d'induction (7) associée à l'élément ferromagnétique (6),
où le mouvement à détecter est représenté par un mouvement relatif entre l'aimant d'excitation (2) et l'élément ferromagnétique (6), et l'énergie prélevée de l'énergie cinétique du mouvement à détecter pendant le rapprochement de ces deux éléments et accumulée au moyen de l'élément ferromagnétique (6) est brusquement libérée lorsqu'une position relative définie et donc une intensité de champ magnétique définie sont atteintes, et une impulsion de tension est générée par variation subite du flux magnétique dans la bobine d'induction (7),
et, comme équipement électronique :
au moins un circuit redresseur (24) pour le redressement d'impulsions de tension de la bobine d'induction (7),
au moins un condensateur (28) apte à être chargé par des impulsions de tension redressées,
au moins un circuit comparateur (22) générant un signal de détection d'impulsion à l'apparition d'une impulsion de tension à compter,
un circuit de comptage et de mémorisation non volatil (32), qui est formé par un registre, sous la forme d'une mémoire, d'un compteur et qui exécute un processus de comptage et de mémorisation pour chaque signal de détection d'impulsion, l'énergie électrique accumulée dans le condensateur (28) servant pour l'alimentation en courant au moins du circuit de comptage et de mémorisation non volatil (32),
un circuit de lecture de données (34, 34') servant au traitement et à la sortie vers un utilisateur externe des données mémorisées dans le circuit de comptage et de mémorisation non volatil (32), et
un circuit de commande (30, 30') empêchant une perturbation du processus de comptage et de mémorisation par le fonctionnement du circuit de lecture de données (34, 34') et inversement, en ce sens que
soit il commande le circuit de lecture de données (34') pour le traitement et la sortie des données mémorisées dans le circuit de comptage et de mémorisation non volatil (32), indépendamment d'une demande provenant de l'utilisateur, le circuit de commande (30') et le circuit de lecture de données (34') étant en l'occurrence également alimentés en énergie électrique obtenue par le mouvement à surveiller et accumulée dans l'électronique (fonctionnement synchrone),
soit, lorsqu'un processus de lecture a été initié et est en cours, et donc le circuit de lecture de données (34), en vertu d'un signal de demande provenant d'un utilisateur à un moment quelconque, exécute un processus de lecture de données des données mémorisées dans le circuit de comptage et de mémorisation non volatil (32), des parties de circuit qui sont requises pour le processus de lecture étant alimentées, au moins pour la période requise correspondante, en énergie externe, il n'autorise pas, lors de l'apparition d'un signal de détection d'impulsion, le signal de détection d'impulsion étant généré par le circuit comparateur quand une impulsion de tension à compter apparaît, de processus de comptage et de mémorisation à exécuter par le circuit de comptage et de mémorisation non volatil (32), mais assure la sauvegarde provisoire de celui-ci et son traitement à l'issue du processus de lecture de données (fonctionnement asynchrone).

2. Détecteur de position selon la revendication 1, **caractérisé en ce qu'**un autre condensateur (28') est prévu pour l'alimentation en courant du circuit de lecture de données (34') dans le fonctionnement synchrone, lequel est apte à être chargé au moyen d'un autre circuit redresseur (24') par des impulsions de tension émises par la bobine d'induction (7), avec une polarité opposée aux impulsions à compter, et **en ce que** le circuit de commande (30') ne commande le circuit de lecture de données (34') pour un traitement ultérieur et une sortie des données mémorisées dans le circuit de comptage et de mémorisation non volatil (32) que si l'autre condensateur (28') a atteint une tension de charge détectée par un autre comparateur (22') et qu'aucun autre processus de comptage et de mémorisation n'est exécuté, le circuit de lecture de données (34'), l'autre comparateur (22') et le circuit de commande (30') étant alimentés en énergie électrique par l'autre condensateur (28').

3. Détecteur de position selon la revendication 1 ou 2, **caractérisé en ce que** le circuit comparateur (22) génère le signal de détection d'impulsion lorsque l'amplitude d'une impulsion de tension provenant de la bobine d'induction (7) dépasse un niveau pré-définissable après passage d'une valeur limite, et **en ce que** ledit signal de détection d'impulsion provoque l'exécution d'un processus de comptage et de mémorisation.

4. Détecteur de position selon la revendication 1 ou 2, **caractérisé en ce que** le circuit comparateur (22) génère le signal de détection d'impulsion lorsque la valeur absolue croissante de la tension sur le ou les condensateurs (28) dépasse un niveau pré-définissable, **en ce que** ce signal de détection d'impulsion provoque l'exécution d'un processus de comptage et de mémorisation, et **en ce qu'**un circuit limiteur de tension (26) est prévu, lequel limite la tension de condensateur à une valeur maximale pré-définissable, ladite valeur maximale et la capacité du ou des condensateurs (28) étant adaptées à la consommation d'énergie formée lors de l'exécution d'un processus de comptage et de mémorisation individuel des parties de circuit (30, 32) impliquées, pour que la décharge du condensateur (28) à l'issue du processus de comptage et de mémorisation soit telle que le circuit comparateur (22) génère à nouveau un signal de détection d'impulsion à la recharge du condensateur.

5. Détecteur de position selon la revendication 1 ou 2, **caractérisé en ce que** le circuit comparateur (22) génère le signal de détection d'impulsion lorsque la valeur absolue croissante de la tension sur le ou les condensateurs (28) dépasse un niveau pré-définissable, **en ce que** ce signal de détection d'impulsion provoque l'exécution d'un processus de comptage et de mémorisation, et **en ce qu'**il est prévu un circuit de décharge déchargeant le ou les condensateurs (28) après chaque processus de comptage et de mémorisation.

6. Détecteur de position selon la revendication 1 ou l'une des revendications 3 à 5 si celles-ci sont dépendantes de la revendication 1, **caractérisé en ce que** le circuit de commande comprend les composants suivants :
une première mémoire (70) qui est chargée à l'apparition d'un signal de détection d'impulsion et émet un niveau de signal de comptage,
une deuxième mémoire (72) qui est chargée à l'apparition d'un signal de demande et émet un niveau de signal de blocage,
un circuit de blocage (74) avec deux entrées, dont l'une est reliée à la sortie de la première mémoire (70) et l'autre à la sortie de la deuxième mémoire (72), lequel n'autorise le niveau de signal de comptage sur une entrée de comptage, sensible aux flancs, du circuit de comptage et de mémorisation (32) pour le déclenchement d'un processus de comptage et de mémorisation, que si aucun niveau de signal de blocage n'est appliqué sur son autre entrée,
**en ce qu'**une impulsion de réinitialisation est émise vers la première mémoire (70) à l'issue du processus de mémorisation dans le circuit de comptage et de mémorisation (32), et
**en ce qu'**une impulsion de réinitialisation est émise vers la deuxième mémoire (72) à l'issue de la sortie de données vers l'utilisateur,
le circuit de commande (30) étant en fonction de la disponibilité respective alimenté en énergie électrique soit par l'alimentation en courant externe soit par le ou les condensateurs (28).

7. Détecteur de position selon la revendication 1 ou la revendication 2, **caractérisé en ce que** le circuit redresseur (24, 24') ne se compose que d'une seule diode.

8. Détecteur de position selon la revendication 1 ou la revendication 2, **caractérisé en ce que** le circuit redresseur (24, 24') se compose d'un transistor de commutation, qui est commutable en va-et-vient entre un état de conduction, où il reçoit une tension de conduction minimale, et un état de blocage, où il ne conduit pas de courant.

9. Détecteur de position selon la revendication 1 ou la revendication 2, **caractérisé en ce que** le circuit redresseur (24) est un circuit en pont de Graetz, dont les diodes sont court-circuitables par paires par des transistors qui leurs sont parallèles.

10. Détecteur de position selon l'une des revendications précédentes, **caractérisé en ce que** le circuit de comptage et de mémorisation non volatil (32) est une FRAM.

11. Détecteur de position selon l'une des revendications précédentes, **caractérisé en ce que** l'élément ferromagnétique (6) est un fil à impulsions.

12. Détecteur de position selon l'une des revendications 1 à 10, **caractérisé en ce que** l'élément ferromagnétique (6) est un fil Wiegand.

13. Détecteur de position selon l'une des revendications précédentes, **caractérisé en ce que** les unités de circuit de l'électronique et, si présents, le circuit limiteur de tension (26), l'autre circuit redresseur (24') et l'autre condensateur (28') sont regroupés dans un module de circuit intégré (20).

14. Détecteur de position selon l'une des revendications 1 à 12, **caractérisé en ce qu'**au moins quelques-unes des unités de circuit du système électronique et/ou, si présents, le circuit limiteur de tension (26), l'autre circuit redresseur (24') et l'autre condensateur (28') sont regroupés dans un module de circuit intégré (20).

15. Détecteur de position selon l'une des revendications précédentes, **caractérisé en ce que** l'aimant d'excitation (2) et l'élément ferromagnétique (6) sont situés par leurs axes longitudinaux (3, 10) sur deux plans parallèles dont la normale commune est l'axe de rotation (4).

16. Détecteur de position selon l'une des revendications 1 à 14, **caractérisé en ce que** les centres de gravité géométriques de deux aimants d'excitation (3, 9) de polarités opposées et de l'élément ferromagnétique (6) sont situés sur un plan dont la normale est l'axe de rotation (4), et **en ce que** les axes longitudinaux (3, 10) de ces éléments s'étendent parallèlement à l'axe de rotation (4).

17. Détecteur de position selon l'une des revendications 1 à 14, **caractérisé en ce que** l'aimant d'excitation (2) et l'élément ferromagnétique (6) sont situés sur un plan dont la normale est l'axe de rotation (4), et **en ce que** l'élément ferromagnétique (6) et l'aimant d'excitation (2) sont disposés radialement à l'axe de rotation (4).

18. Détecteur de position selon l'une des revendications 1 à 14, **caractérisé en ce que** l'aimant d'excitation (2) et l'élément ferromagnétique (6) sont situés sur un plan et orientés perpendiculairement l'un à l'autre.

19. Détecteur de position selon l'une des revendications 2 à 18, **caractérisé en ce qu'**un émetteur est affecté au circuit de lecture de données (34'), lequel rend les données du circuit de comptage et de mémorisation (32) disponibles à un circuit de réception pour l'utilisateur, via une liaison radioélectrique.

20. Détecteur de position selon l'une des revendications précédentes, **caractérisé en ce que** le circuit de lecture de données (34, 34') sert aussi à l'extraction de données caractéristiques vers le circuit de comptage et de mémorisation non volatil (32).
